# EUROPÄISCHE PATENTANMELDUNG

(11) **EP 3 162 185 A1**
(43) Veröffentlichungstag der Anmeldung: **03.05.2017**
(21) Anmeldenummer: 16401073.8
(22) Anmeldetag: 21.10.2016
(51) Int. Cl.: A01D 43/077

(54) **VORRICHTUNG ZUM MÄHEN, VERTIKUTIEREN UND/ODER AUFSAMMELN**

(30) Priorität: 28.10.2015 DE 102015118370
(71) Anmelder: Amazonen-Werke H. Dreyer GmbH & Co. KG, 49205 Hasbergen (DE)
(72) Erfinder: Klein, Laurent, 57910 HAMBACH (FR)

(57) **Zusammenfassung**

Es wird eine mobile Bearbeitungseinheit (1) zur Pflege von Grünflächen (2), insbesondere von Rasen- und Wiesenflächen vorgestellt, die einen quer zur Bewegungsrichtung (B) ausgerichteten, in einem Gehäuse (3) aufgenommenen, um eine Rotationsachse (4) drehbar gelagerten und Bearbeitungswerkzeuge (5) aufweisenden Bearbeitungsrotor (6) umfasst, wobei eine, dem Bearbeitungsrotor (6), bezogen auf die Bewegungsrichtung (B) der mobilen Bearbeitungseinheit (1), nachfolgend angeordnete Tiefenführungsrolle (7) vorhanden ist. Die erfindungsgemäße Lösung besteht vorliegend darin, dass bezogen auf die Bewegungsrichtung (B) der mobilen Bearbeitungseinheit (1) hinter der Tiefenführungsrolle (7) zumindest eine Abluftöffnung (8) vorhanden ist.

## Beschreibung

Eine mobile Bearbeitungseinheit zur Pflege von Grünflächen, insbesondere von Rasen- und Wiesenflächen, ist bereits in der EP 0 712 568 B1 beschrieben. Die Bearbeitungseinheit wird hierbei mit einem angetriebenen Fahrzeug gekoppelt und als "Mähwerk" bezeichnet. Sie besteht nach dem Offenbarungsgehalt der Druckschrift aus einem quer zu der Bewegungsrichtung der Bearbeitungseinheit ausgerichteten, um eine Rotationsachse drehbaren und Bearbeitungswerkzeuge aufweisenden Bearbeitungsrotor, der in einem Gehäuse angeordnet ist. Der Bearbeitungsrotor verfügt entlang seines Außenumfanges über eine Vielzahl einzelner Bearbeitungswerkzeuge, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Bezogen auf die Bewegungsrichtung sind vor und hinter dem Bearbeitungsrotor durch einen Höhenführungsrahmen verbundene Führungselemente vorhanden, wobei es sich hierbei einerseits um frontseitige Laufräder und diesen gegenüberliegend, also rückseitig des Bearbeitungsrotors, um eine Tiefenführungsrolle handelt. Zur Einstellung der Arbeitshöhe des Bearbeitungsrotors und damit der Schnitthöhe weist die Vorrichtung zur Pflege von Grünflächen nach der EP 0 712 568 B1 ferner eine Verstelleinrichtung auf.

Eine ähnliche mobile Bearbeitungseinheit zur Pflege von Grünflächen geht auch aus der DE 195 35 362 A1 hervor. Bei der in dieser Druckschrift offenbarten Lösung ist das den Bearbeitungsrotor aufnehmenden Gehäuse weitgehend geschlossen ausgeführt, so dass lediglich die für die Pflege der Grünfläche erforderliche Öffnung unterhalb des Bearbeitungsrotors vorhanden ist. Insbesondere bei feuchten Grünflächen besteht allerdings die Gefahr, dass sich das abgetrennte oder aufgesammelte Gut innerhalb des Gehäuses ansammelt und verklumpt, was zu Behinderungen bei der Bearbeitung der Grünfläche führen kann.

Die Arbeitsweise derartiger mobiler Bearbeitungseinheiten gestaltet sich dabei allgemein so, dass die von dem Bearbeitungsrotor abgetrennten oder aufgenommenen Bestandteile der Grünfläche durch die Rotationsbewegung des Bearbeitungsrotors und gegebenenfalls unter Zuhilfenahme von hierzu geeigneten Fördereinrichtungen beispielsweise in einen Auffangbehälter abtransportiert werden. Dabei können einzelne Bestandteile auf den Boden fallen und werden folglich nicht aufgenommen. Durch die verhältnismäßig hohe Drehzahl des Bearbeitungsrotors entsteht innerhalb des den Bearbeitungsrotor aufnehmenden Gehäuses eine zumindest zum Teil verwirbelte Luftströmung, die in zum Teil unbefriedigender Weise dazu führt, dass einzelne Bestandteile der bearbeiteten Grünfläche nicht wunschgemäß zu den Fördereinrichtungen und damit in hierfür vorhandene Auffangbehälter gelangen, sondern auf die Grünfläche fallen und dort zurückbleiben. Damit ergibt sich jedoch ein nicht einheitliches Bild der Pflege der Grünfläche, was beispielsweise deshalb von Nachteil ist, weil die zurückbleibenden Pflanzenteile einer verstärkten Moosbildung oder Fäulnis Vorschub leisten beziehungsweise nachträglich von der Grünfläche entfernt werden müssen. Weitere negative Auswirkungen einer unzureichenden Luftströmungsführung innerhalb des Gehäuses der Bearbeitungseinheit sind eine verstärkte Emissionswirkung, das heißt eine vermehrter Austrag von Staub in die Umgebung der Bearbeitungseinheit sowie eine verstärkte Geräuschentwicklung.

Zur Vermeidung dieser Auswirkungen beschreibt die DE 10 2006 034 435 A1 eine mobile Bearbeitungseinheit, die in diesem Fall von einer Grünfläche aufzusammelndes Gut aufnimmt und über einen innerhalb des Gehäuses angeordneten Zuführschacht in einen Auffangbehälter überführt. Dabei wird über einen von dem Auffangbehälter zu dem Gehäuse verlaufenden Luftrückführschacht die zum Transport des Gutes erzeugte Luft vom Auffangbehälter zum Gehäuse zurückgeführt. Durch diese Maßnahme entweicht die vom Gehäuse erzeugte Transportluft mit den darin vorhandenen Staubpartikeln nicht nach außerhalb des Gehäuses, sondern wird über den Luftrückführschacht zurückgeführt und verbleibt damit innerhalb des Kreislaufes der Bearbeitungseinheit. Neben der Reduzierung der Staubemissionen kann dadurch auch eine Reduzierung der Geräuschentwicklung erreicht werden. Diese Lösung ist jedoch insgesamt verhältnismäßig aufwändig, weil ein zusätzlicher Luftrückführschacht erforderlich ist, wobei das Gehäuse auch hierbei, bis auf die Bearbeitungsöffnung für den Bearbeitungsrotor geschlossen ausgeführt ist.

Der Erfindung liegt die Aufgabe zugrunde, eine mobile Bearbeitungseinheit zur Pflege von Grünflächen bereitzustellen, bei der die Aufnahme der abgetrennten oder aufgesammelten Bestandteile der Grünfläche in verbesserter Weise erfolgt.

Die Erfindung löst diese Aufgabenstellung mit den Merkmalen des Patentanspruches 1.

Weitere Ausgestaltungen der Erfindung sind Gegenstand der Unteransprüche.

Eine mobile Bearbeitungseinheit zur Pflege von Grünflächen, insbesondere von Rasen- und Wiesenflächen, die einen quer zur Bewegungsrichtung ausgerichteten, in einem Gehäuse aufgenommenen, um eine Rotationsachse drehbar gelagerten und Bearbeitungswerkzeuge aufweisenden Bearbeitungsrotor umfasst, wobei eine, dem Bearbeitungsrotor, bezogen auf die Bewegungsrichtung der mobilen Bearbeitungseinheit, nachfolgend angeordnete Tiefenführungsrolle vorhanden ist, wurde erfindungsgemäß dahingehend weitergebildet, dass bezogen auf die Bewegungsrichtung der mobilen Bearbeitungseinheit hinter der Tiefenführungsrolle zumindest eine Abluftöffnung vorhanden ist.

Die Erfindung geht dabei einen vollkommen neuen Weg, der nicht mehr darin besteht, das Gehäuse möglichst hermetisch abzuschirmen, um zu verhindern, dass Staub, Geräusche oder abgetrennte Bestandteile der Grünfläche an die Umgebung abgegeben werden. Die neue Lösung besteht vielmehr darin, zumindest eine zusätzliche Abluftöffnung vorzusehen, die in erstaunlich vorteilhafter Weise zu einer optimierten Luftströmungsführung innerhalb des Gehäuses führt, so dass die erwähnten Emissionen und abgetrennten Bestandteile der Grünfläche durch die Rotationsbewegung des Bearbeitungsrotors angesaugt und abtransportiert werden können. Durch die Anordnung zumindest einer Abluftöffnung hinter der Tiefenführungsrolle entsteht nämlich vor dem Bearbeitungsrotor ein verstärkter Unterdruck, der eine Saugwirkung entfaltet und dadurch den beschriebenen Effekt bewirkt. Wenn in diesem Zusammenhang von wenigstens einer Abluftöffnung gesprochen wird, so ist damit gemeint, dass selbstverständlich auch mehrere Abluftöffnungen vorgesehen werden können, wie in erfindungsgemäßer Weise angeordnet sind. Es bedarf keiner besonderen Erwähnung, dass die geometrische Auslegung der mindestens einen Abluftöffnung vielgestaltig sein kann. Nur beispielhaft seien an dieser Stelle Bohrungen in Siebblechen oder Schlitze erwähnt.

Eine erste Ausgestaltung der Erfindung ist darin zu sehen, dass die zumindest eine Abluftöffnung zwischen dem Gehäuse und der Tiefenführungsrolle angeordnet ist. Mit anderen Worten wird das Gehäuse in dem erwähnten Abschnitt im einfachsten Fall nach unten, also auf der der Grünfläche zugewandten Seite, offen ausgeführt. Diese einfache Ausführungsvariante ermöglicht ohne erheblichen konstruktiven Aufwand die erfindungsgemäßen Vorteile in sinnfälliger Weise zu nutzen. Dabei ist sogar eine Nachrüstung bereits im Einsatz befindlicher Bearbeitungseinheiten möglich, wenn ein Abschnitt des Gehäuses hinter der Tiefenführungsrolle geöffnet wird. Zahlreiche Versuche haben ergeben, dass sich die Strömungsführung innerhalb des Gehäuses bereits durch diese Maßnahme wesentlich verbessert.

Eine alternative Lösungsmöglichkeit zu der zuvor genannten Ausführung ist darüber hinaus darin zu sehen, dass die zumindest eine Abluftöffnung in das Gehäuse eingebracht ist. Hierbei geht der Lösungsvorschlag dahin, das Gehäuse konstruktiv so auszuführen, dass zumindest eine Abluftöffnung im Bereich hinter der Tiefenführungsrolle vorgesehen wird. Auch hierbei können die bereits erwähnten Siebbleche mit Bohrungen oder Schlitzen oder beispielsweise auch Lamellen-bleche mit Abluftöffnungen zwischen den Lamellenblechen vorgesehen werden.

Bevorzugt erstreckt sich die zumindest eine Abluftöffnung durchgehend über die gesamte Breite des Gehäuses oder über die Länge der Tiefenführungsrolle oder über die gesamte Breite der Bearbeitungseinheit. Allerdings ist diese weiterbildende Maßnahme nach der Erfindung nicht zwingend. Vielmehr können die Abluftöffnungen auch nur abschnittsweise vorgesehen, also beispielsweise von Stegen unterbrochen werden. Von Vorteil ist es allerdings, auch bei einer Unterteilung der Abluftöffnungen in einzelne Abschnitte, diese Abluftöffnungen jeweils über die gesamte Breite der genannten Bestandteile der mobilen Bearbeitungseinheit beziehungsweise über die gesamte Breite der mobilen Bearbeitungseinheit vorzusehen.

Hinsichtlich der eingangs bereits erwähnten, strömungstechnisch optimierten Auslegung der gesamten mobilen Bearbeitungseinheit beziehungsweise im Besonderen des Gehäuses, wird darüber hinaus vorgeschlagen, dass bezogen auf die Bewegungsrichtung der mobilen Bearbeitungseinheit vor dem Bearbeitungsrotor zumindest eine Ansaugöffnung vorhanden ist. Durch die im Bereich der Ansaugöffnung durch den Bearbeitungsrotor entstehende Saugwirkung infolge des sich hier ausbildenden Unterdrucks werden lose Bestandteile der Grünfläche und Staubpartikel angesaugt und zusammen mit den abgetrennten Bestandteilen der Grünfläche über geeignete Fördereinrichtungen abtransportiert, so dass sie zum Beispiel in an sich bekannter Weise in einem Auffangbehälter gesammelt werden können.

Der durch die Rotation des Bearbeitungsrotors erzeugte Unterdruck kann in vorteilhafter Weise verstärkt werden, wenn sich gemäß einer Ausgestaltung der Erfindung die zumindest eine Ansaugöffnung in Strömungsrichtung betrachtet trichterförmig verjüngt. Durch diese Verjüngung entsteht eine Beschleunigung der Luftströmung nach dem Venturi-Effekt und eine damit gegebene Verbesserung der Aufnahme loser Bestandteile von der Grünfläche beziehungsweise des bei der Bearbeitung entstehenden Staubs.

Auch die zumindest eine Ansaugöffnung kann sich entsprechend einer weiterbildenden Maßnahme nach der Erfindung über die gesamte Breite des Gehäuses oder über die Länge der Tiefenführungsrolle oder über die gesamte Breite der Bearbeitungseinheit erstrecken. Somit wird sichergestellt, dass die positive Wirkung des sich ausbildenden Unterdrucks vor dem Bearbeitungsrotor auch tatsächlich die gesamte zu bearbeitende Fläche erfasst.

Wie dies bereits im Zusammenhang mit einer konkreten Ausgestaltung der Ansaugöffnung beschrieben wurde, ist es auch für die zumindest eine Abluftöffnung von Vorteil, wenn sich diese in Strömungsrichtung betrachtet trichterförmig erweitert. Durch die Erweiterung der Abluftöffnung wird die Geschwindigkeit der Luftströmung reduziert, was dazu führt, dass über die Abluftöffnung nahezu keine abgetrennten Bestandteile der Grünfläche an die Umgebung abgegeben werden. Folglich bildet sich innerhalb des Gehäuses, und hier vorzugsweise im Bereich des Bearbeitungsrotors ein Strömungskreislauf aus, der in erfindungsgemäßer Weise genutzt wird.

Innerhalb des Gehäuses ist es darüber hinaus vorteilhaft, wenn Leitbleche zur strömungsoptimierten Luftführung verwendet werden. Durch diese Leitbleche kann die Luftströmungsführung gezielt beeinflusst werden, so dass der zuvor bereits erwähnte Strömungskreislauf erhalten bleibt.

Natürlich kann eine erfindungsgemäße, mobile Bearbeitungseinheit als selbstfahrendes Gerät ausgeführt sein oder manuell fortbewegt werden. Eine hierzu alternative und sehr vorteilhafte Lösung besteht jedoch gemäß einer Weiterbildung der Erfindung darin, dass die mobile Bearbeitungseinheit mit einem Antriebsfahrzeug koppelbar ist. Diese Ausführung hat den Vorteil, dass die mobile Bearbeitungseinheit von dem Antriebsfahrzeug lösbar ist und beispielsweise separat aufbewahrt werden kann, so dass dadurch wertvoller Stau- beziehungsweise Lagerraum gespart werden kann. Das Antriebsfahrzeug ist zudem bei entkoppelter Bearbeitungseinheit auch für andere Zwecke einsetzbar.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Fig. 1:: eine mobile Bearbeitungseinheit in einer teilweise geschnittenen Seitenansicht
- und Fig. 2:: die vergrößerte Einzelheit II aus Fig 1.

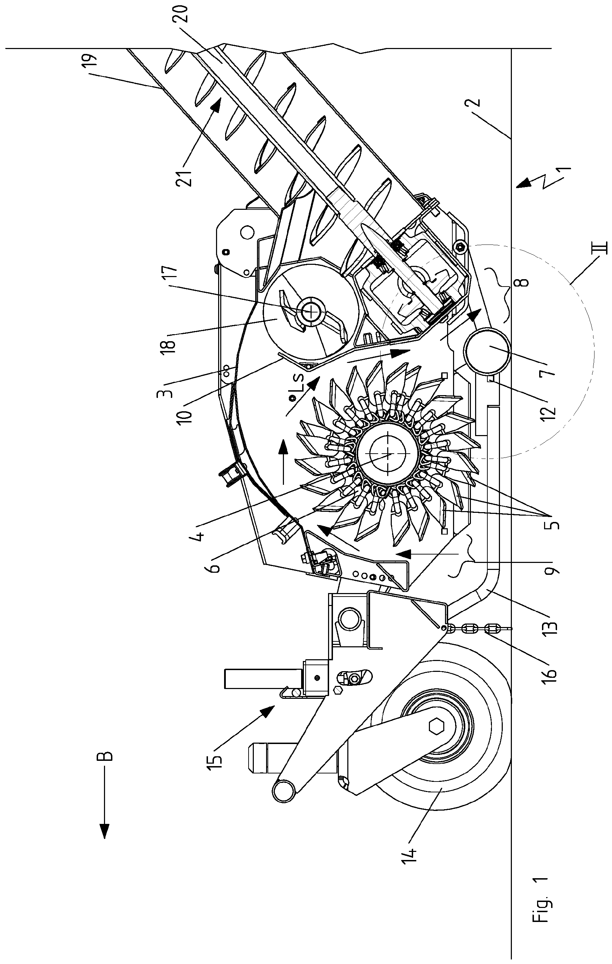

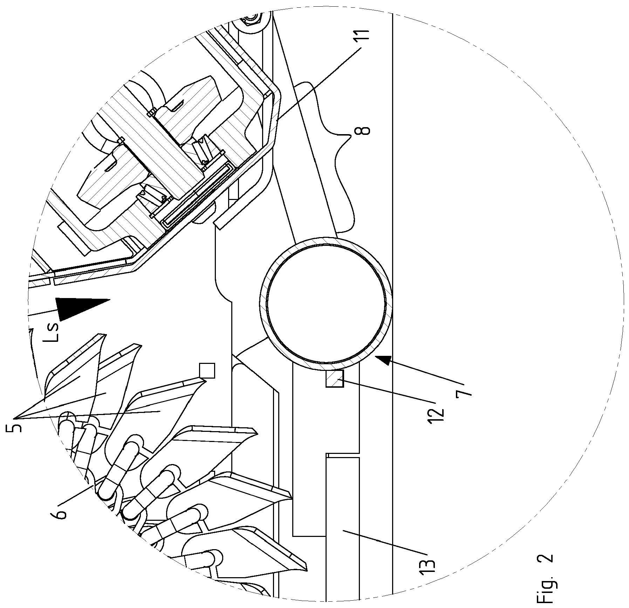

Die mobile Bearbeitungseinheit 1 zur Pflege einer Grünfläche 2, wie sie in Fig. 1 gezeigt ist, besteht in dem dargestellten Beispiel aus einem Gehäuse 3, in dem ein Bearbeitungsrotor 6 um eine Rotationsachse 4 drehbeweglich gelagert ist. Der Bearbeitungsrotor 6 rotiert hierbei in Uhrzeigerrichtung. Zur Pflege einer Grünfläche 2, bei der es sich beispielsweise um eine Rasen- oder Wiesenfläche handeln kann, wird der durch einen Antriebsmotor angetriebene Bearbeitungsrotor 6 in eine Rotationsbewegung versetzt, so dass die entlang seines Umfanges angeordneten Bearbeitungswerkzeuge 5 die Grünfläche 2 in ihrer Länge kürzen und/oder Unrat oder Laub von der Grünfläche 2 aufsammeln. Bei den Bearbeitungswerkzeugen 5 handelt es sich bei dem gezeigten Beispiel um Schneidmesser, so dass die Bearbeitungseinheit 1 in Fig. 1 ein Mähwerk ist. Diese Besonderheit geht deutlicher aus der vergrößerten Einzelheit in Fig. 2 hervor. Durch die Rotationsbewegung des Bearbeitungsrotors 6 wird das aufgenommene Gut innerhalb des Gehäuses 3 zu einer Transportschnecke 18 gefördert, die um eine quer zur Bewegungsrichtung B angeordnete Schneckenachse 17 rotierend gelagert ist. Die Transportschnecke 18 führt die abgetrennten oder aufgesammelten Bestandteile der Grünfläche 2 etwa mittig zusammen. In diesem zentralen Bereich der Transportschnecke 18 ist die hier unter einem schrägen Winkel verlaufende Förderschnecke 21 angeordnet, deren Aufgabe darin besteht, die von der Transportschnecke 18 zugeführten Reste beispielsweise in einen Auffangbehälter zu transportieren, der jedoch in der Fig 1 nicht gezeigt ist. Hierzu rotiert die Förderschnecke 21 um ihre Schneckenachse 20. Sie ist darüber hinaus in einem Förderrohr 19 aufgenommen, innerhalb dessen die abgetrennten Bestandteile transportiert werden. Die mobile Bearbeitungseinheit 1 weist darüber hinaus einen zu dem Gehäuse 3 relativ bewegbaren Höhenführungsrahmen 13 auf, der in Bewegungsrichtung B betrachtet, im vorderen Bereich zwei koaxial zueinander, pendelnd gelagerte und als Führungselemente wirkende Räder 14 aufweist, durch deren Höhenverstellung mittels eines Verstellmechanismus 15 die Schnitthöhe des Bearbeitungsrotors 6 verändert werden kann. Unterhalb des Höhenführungsrahmens 13 ist zur Überbrückung des freien Abstandes zwischen dem Höhenführungsrahmen 13 und dem Untergrund 2 darüber hinaus ein Schlagschutz 16 angeordnet, der verhindert, dass von dem Bearbeitungsrotor 6 erfasste Gegenstände, wie Steine, unkontrolliert in die Umgebung abgegeben werden und der damit der Vermeidung von Verletzungen umstehender Personen beziehungsweise der Vermeidung von Beschädigungen von Gegenständen in unmittelbarer Umgebung der Bearbeitungseinheit 1 dient. Auf der den Rädern 14 gegenüberliegenden Seite, also auf der Rückseite des Bearbeitungsrotors 6, ist darüber hinaus an dem Höhenführungsrahmen 13 eine Tiefenführungsrolle 7 vorhanden, die grundsätzlich dazu dient, den Untergrund zu glätten. Da diese Tiefenführungsrolle 7 unmittelbar über die zuvor vom Bearbeitungsrotor 6 geschnittene Grünfläche 2 bewegt wird, kommt es verstärkt dazu, dass Reste der Pflege der Grünfläche 2 an der Tiefenführungsrolle 7 haften bleiben. Um zu vermeiden, dass diese Reste der Grünfläche 2 oder auf dieser herumliegende Gegenstände an der Tiefenführungsrolle 7 haften bleiben und dort beispielsweise verklumpen, ist eine Abstreifereinrichtung 12 vorhanden, die, wie die vergrößerte Einzelheit in Fig. 2 deutlicher zeigt, im vorliegenden Fall aus einem Vierkantstab besteht, der unter elastischer Vorspannung an der Mantelfläche der Tiefenführungsrolle 7 anliegt und somit durch die Drehbewegung der Tiefenführungsrolle 7 seine Abstreifwirkung entfaltet. Anders ausgedrückt gleitet die Abstreifereinrichtung 12 an der Oberfläche der Tiefenführungsrolle 7 entlang. Dadurch wird die Tiefenführungsrolle 7 von den genannten Resten der Grünfläche 2 befreit, so dass diese in den Spalt zwischen Bearbeitungsrotor 6 und Tiefenführungsrolle 7 gelangen, was zur Folge hat, dass die abgestreiften Bestandteile erneut vom Bearbeitungsrotor 6 erfasst und in der zuvor beschriebenen Weise zur Transportschnecke 18 transportiert werden, von wo aus ihr Abtransport über die Förderschnecke 21 erfolgt. Mit dieser Lösung ist es damit möglich, zu vermeiden, dass abgetrennte Bestandteile der Grünfläche 2 nach der Bearbeitung derselben auf der Grünfläche 2 liegen bleiben.

Die Besonderheit der in Fig. 1 gezeigten Ausführungsvariante einer mobilen Bearbeitungseinheit 1 besteht darin, dass das Gehäuse 3 nicht, wie bislang üblich, weitgehend hermetisch abgeschlossen ausgeführt ist, sondern, im Gegenteil, in Bewegungsrichtung B betrachtet vor dem Bearbeitungsrotor 6 über eine Ansaugöffnung 9 und hinter dem Bearbeitungsrotor 6 über eine Abluftöffnung 8 verfügt. Dabei ist die Abluftöffnung 8 in dem Bereich hinter der Tiefenführungsrolle 7 vorhanden, was zu einer gerichteten Luftströmung Ls innerhalb des Gehäuses 3 führt. Durch diese gerichtete Luftströmung Ls gelingt es in sehr einfacher und damit vorteilhafter Weise, vor dem Bearbeitungsrotor 6 einen Unterdruck und damit einen Saugeffekt zu erzeugen, der die vom Bearbeitungsrotor abgetrennten oder aufgesammelten Bestandteile der Grünfläche 2 zur Transportschnecke 18 und damit zur Förderschnecke 21 transportiert. Die Luftströmung Ls innerhalb des Gehäuses 3 lässt sich darüber hinaus zusätzlich verstärken, wenn verschiedene Leitbleche 10 beziehungsweise 11 in das Gehäuse 3 eingefügt werden. In der Darstellung in Fig. 1 ist ein insgesamt mit 10 bezeichnetes Leitblech vorhanden, dass die Strömungsführung vor der Transportschnecke 18 übernimmt.

Betrachtet man in diesem Zusammenhang die Fig. 2, so wird daraus ersichtlich, dass auch im Bereich der Abluftöffnung 8 ein Leitblech 11 vorhanden ist, das zudem eine trichterförmige Erweiterung der Abluftöffnung 8 in Strömungsrichtung Ls der Luftströmung innerhalb des Gehäuses 3 bewirkt. Durch diese trichterförmige Erweiterung der Abluftöffnung 8 reduziert sich die Strömungsgeschwindigkeit der Luftströmung Ls, so dass eventuell noch in dem Luftstrom Ls vorhandene Partikel nicht durch die Abluftöffnung 8 abtransportiert werden, sondern auf die Tiefenführungsrolle 7 fallen und hier über die Abstreifereinrichtung 12 wieder in den Kreislauf des Bearbeitungsrotors 6 überführt werden. Insgesamt lässt sich dadurch mit der erfindungsgemäßen mobilen Bearbeitungseinheit 1 eine wesentliche Verbesserung der Pflege einer Grünfläche 2 erreichen.

### BEZUGSZEICHENLISTE:

- 1: Bearbeitungseinheit
- 2: Grünfläche
- 3: Gehäuse
- 4: Rotationsachse
- 5: Bearbeitungswerkzeug
- 6: Bearbeitungsrotor
- 7: Tiefenführungsrolle
- 8: Abluftöffnung
- 9: Ansaugöffnung
- 10: Leitblech
- 11: Leitblech
- 12: Abstreifereinrichtung
- 13: Höhenführungsrahmen
- 14: Rad
- 15: Verstellmechanismus
- 16: Schlagschutz
- 17: Schneckenachse
- 18: Transportschnecke
- 19: Förderrohr
- 20: Schneckenachse
- 21: Förderschnecke

## Patentansprüche

1. Mobile Bearbeitungseinheit (1) zur Pflege von Grünflächen (2), insbesondere von Rasen- und Wiesenflächen, die einen quer zur Bewegungsrichtung (B) ausgerichteten, in einem Gehäuse (3) aufgenommenen, um eine Rotationsachse (4) drehbar gelagerten und Bearbeitungswerkzeuge (5) aufweisenden Bearbeitungsrotor (6) umfasst, wobei eine, dem Bearbeitungsrotor (6), bezogen auf die Bewegungsrichtung (B) der mobilen Bearbeitungseinheit (1), nachfolgend angeordnete Tiefenführungsrolle (7) vorhanden ist, **dadurch gekennzeichnet, dass** bezogen auf die Bewegungsrichtung (B) der mobilen Bearbeitungseinheit (1) hinter der Tiefenführungsrolle (7) zumindest eine Abluftöffnung (8) vorhanden ist.

2. Mobile Bearbeitungseinheit nach Anspruch 1, **dadurch gekennzeichnet, dass** die zumindest eine Abluftöffnung (8) zwischen dem Gehäuse (3) und der Tiefenführungsrolle (7) angeordnet ist.

3. Mobile Bearbeitungseinheit nach Anspruch 1, **dadurch gekennzeichnet, dass** die zumindest eine Abluftöffnung (8) in das Gehäuse (3) eingebracht ist.

4. Mobile Bearbeitungseinheit nach einem der vorstehend genannten Ansprüche, **dadurch gekennzeichnet, dass** sich die zumindest eine Abluftöffnung (8) über die Breite des Gehäuses (3) oder über die Länge der Tiefenführungsrolle (7) oder über die gesamte Breite der Bearbeitungseinheit (1) erstreckt.

5. Mobile Bearbeitungseinheit nach einem der vorstehend genannten Ansprüche, **dadurch gekennzeichnet, dass** bezogen auf die Bewegungsrichtung (B) der mobilen Bearbeitungseinheit (1) vor dem Bearbeitungsrotor (6) zumindest eine Ansaugöffnung (9) vorhanden ist.

6. Mobile Bearbeitungseinheit nach Anspruch 5, **dadurch gekennzeichnet, dass** sich die zumindest eine Ansaugöffnung (9) in Strömungsrichtung (Ls) betrachtet trichterförmig verjüngt.

7. Mobile Bearbeitungseinheit nach Anspruch 5 oder 6, **dadurch gekennzeichnet, dass** sich die zumindest eine Ansaugöffnung (9) über die Breite des Gehäuses (3) oder über die Länge der Tiefenführungsrolle (7) oder über die gesamte Breite der Bearbeitungseinheit (1) erstreckt.

8. Mobile Bearbeitungseinheit nach einem der vorstehend genannten Ansprüche, **dadurch gekennzeichnet, dass** sich die zumindest eine Abluftöffnung (8) in Strömungsrichtung (Ls) betrachtet trichterförmig erweitert.

9. Mobile Bearbeitungseinheit nach einem der vorstehend genannten Ansprüche, **dadurch gekennzeichnet, dass** innerhalb des Gehäuses (3) Leitbleche (10, 11) zur strömungsoptimierten Luftführung vorhanden sind.

10. Mobile Bearbeitungseinheit nach einem der vorstehend genannten Ansprüche, **dadurch gekennzeichnet, dass** die mobile Bearbeitungseinheit (1) mit einem Antriebsfahrzeug koppelbar ist.
